# EUROPEAN PATENT SPECIFICATION

(11) **EP 4 273 431 B1**
(45) Date of publication and mention of the grant of the patent: **01.01.2025**
(21) Application number: 22305669.8
(22) Date of filing: 05.05.2022
(51) Int. Cl.: F16L 1/19, F16L 1/20, E21B 17/01, E21B 17/08, E21B 19/00, E21B 47/007, F16L 33/01

(54) **A HANG-OFF SYSTEM FOR MEASURING A TOP TENSION IN A FLEXIBLE PIPE, ASSOCIATED ASSEMBLY AND ASSEMBLING METHOD**
HÄNGESYSTEM ZUM MESSEN EINER OBEREN SPANNUNG IN EINEM FLEXIBLEN ROHR, ZUGEHÖRIGE ANORDNUNG UND ANORDNUNGSVERFAHREN
SYSTÈME DE SUSPENSION POUR MESURER UNE TENSION SUPÉRIEUR DANS UN TUYAU FLEXIBLE, ASSEMBLAGE ASSOCIÉ ET PROCÉDÉ D'ASSEMBLAGE

(43) Date of publication of application: 08.11.2023
(73) Proprietor: TechnipFMC Subsea France, 92400 Courbevoie (FR)
(72) Inventor: ALVES PINTO MOSQUEIRA GOMES, Cristiano, 0275 OSLO (SKØYEN) (NO); ALVARÃES, Camila, Pereira, 22021-040 RIO DE JANEIRO (BR); CARDOSO BANDEIRA, Carlos, Filipe, 20551-080 RIO DE JANEIRO (BR); RONALDO ANDRADE DOS REIS, Carlos, 22750-320 RIO DE JANEIRO (BR); ARRUDA, Fábio, Rogerio, 22793-924 RIO DE JANEIRO (BR); LEITÃO GONÇALVES TOSTE, Fernando, 20540-140 RIO DE JANEIRO (BR); MOZA, Jucimar, 22611-201 RIO DE JANEIRO (BR); MAGALHES, Paulo, Bailly, 24230-253 NITERÓI (BR)
(74) Representative: Lavoix

(56) References cited:
- WO-A1-2014/001249
- BR-A2- PI0 801 011
- US-A1- 2017 159 377
- US-A1- 2020 190 913
- US-B2- 7 063 485

## Description

According to a first aspect, the present invention relates to a hang-off system for measuring a top tension in a flexible pipe.

The flexible pipe is used to transport production fluids, such as oil and/or gas and/or water from one location to another. The flexible pipe is generally formed of a plurality of layers that are concentric and superposed. The flexible pipe is for example a flexible pipe of a type that is not bonded (or "unbounded"). It is considered "unbounded" since the tensile armor layers of the pipe are free to move relative to each other during a flexion of the flexible pipe, i.e. the tensile armor layers are not embedded in a bonding material such as an elastomer.

In particular, the flexible pipe is a flexible pipe disposed across a body of water, between a bottom assembly designed for collecting a fluid at the bottom of the body of water, and a surface assembly designed for collecting and distributing the fluid. The surface assembly may be a semi-submersible platform, a floating production storage and offloading unit (FPSO), a ship, or any other floating unit such as a ship.

The flexible pipe is generally formed by an assembly of a flexible pipe body and at least one end fitting arranged at an end of the flexible pipe body. The end fitting provides a mechanical device forming a transition between the flexible pipe and a connector. Various layers of the flexible pipe are introduced to the end fitting and are sealingly engaged with a portion of the end fitting.

Generally, a hang-off system is provided to assemble the flexible pipe onto the surface assembly. The hang-off system allows transferring the vertical loads from the flexible pipe to the surface assembly. In particular, the hang-off system holds the end fitting in place in case of reaction due to an abrupt rupture of the flexible pipe top section.

Indeed, in use, the end fitting of the flexible pipe is subject to various forces including high tension and compression loads due to environmental factors such as temperature and pressure fluctuations and/or underwater currents. Moreover, the weight of the flexible pipe may also cause high stresses and strains in the end fitting. Through the lifetime of the flexible pipe, these forces may lead to structural failures of the flexible pipe, if used outside the design conditions and qualification envelope, or possible failure modes depending on the operational conditions.

It is then crucial to monitor forces acting on the top section of the flexible pipe over time to allow appropriate servicing when needed. Prior art hang-off systems and related techniques are disclosed in the following documents: US 2020/190913 A1, WO 2014/001249 A1, BR PI0 801 011 A2, US 2017/159377 A1 and US 7 063 485 B2. In particular document WO 2014/001249 A1 discloses a hang-off system for measuring a top tension in a flexible pipe where an annular collar comprises one top and one bottom plate. Strain gauges are provided at equal spacing around the circumference of the hang-off. Each strain gauge is provided adjacent a longitudinal cavity extending from the radially inner surface to the radially outer surface of the hang off.

An object of the invention is to provide a hang-off system fulfilling the requirements in term of structural resistance and allowing a reliable monitoring of the deformation of the top section of the flexible pipe and an easy installation on the surface assembly.

To the end, the subject-matter of the invention relates to a hang-off system for measuring a top tension in a flexible pipe, said flexible pipe comprising a flexible pipe body and a top end-fitting arranged at an end of the flexible pipe body, the hang-off system being intended to maintain the top end-fitting on a surface assembly, the hang-off system comprising :
- an annular collar extending along a first axis, the annular collar being intended to be arranged around the top end-fitting, the annular collar being formed by at least two parts assembled to each other, each part comprising a top plate and a bottom plate assembled to each other, said top plate and bottom plate delimiting an intermediate space between them, at least one part comprising at least one load cell arranged in the intermediate space (86) and sandwiched between the top plate and the bottom plate, the bottom plate being intended to be assembled on the surface assembly,
- a data acquisition system connected to the load cell.

The hang-off system according to the invention may comprise one or more of the following features, provided they are within the scope of the dependent claims:
- each part comprises at least one load cell, the load cells of the hang-off system being regularly spaced around the first axis;
- the top plate mainly extends in a first plane and the bottom plate mainly extends in a second plane substantially parallel to the first plane and perpendicular to the first axis;
- the annular collar is formed by exactly two parts or exactly three parts assembled to each other;
- the annular collar is formed by exactly three parts assembled to each other, each part comprising a single load cell sandwiched between the top plate and the bottom plate of said part;
- each part comprises a plurality of fasteners and locknuts for assembling the top plate to the bottom plate, each fastener extending along an axis substantially parallel to the first axis;
- the top plate and/or the bottom plate define a convex surface protruding towards the intermediate space, said convex surface being in contact with the load cell;
- each bottom plate and each top plate of each part of the annular collar extends respectively along a circular arc in a plane substantially perpendicular to the first axis between a first end and a second end, each first end and second end comprising at least an assembling portion, the at least two parts of the annular collar being assembled to each other by said assembling portions;
- at least one part of the annular collar comprises at least one shim arranged between the bottom plate and the load cell; and
- each part of the annular collar comprises at least a first reinforcement element protruding from the top plate towards the intermediate space, and a second reinforcement element protruding from the bottom plate towards the intermediate space, the first reinforcement element being arranged facing the second reinforcement element along a direction substantially parallel to the first axis, the first reinforcement element and the second reinforcement element being separated by a gap comprised between 5 mm and 10 mm.

The subject-matter of the invention also relates to an assembly comprising:
- a flexible pipe comprising a top end-fitting,
- a surface assembly,
- a hang-off system as described above, the hang-off system maintaining the top end-fitting on the surface assembly.

The subject-matter of the invention also relates to a method for assembling a top end-fitting of a flexible pipe on a surface assembly with a hang-off system as described above, said method comprising the following steps:
- a preparation step comprising, for each part of the annular collar, assembling the top plate to the bottom plate and arranging at least one load cell in the intermediate space of one of the parts,
- an assembling step comprising forming the annular collar by assembling the parts to each other around the end fitting and by assembling the parts to the surface assembly.

The method according to the invention may comprise one or more of the following features, provided they are within the scope of the dependent claims:
- the preparation step is performed onshore and the assembling step is performed offshore;
- the preparation step comprises a factory acceptance test and/or a site acceptance test and/or a calibration test; and
- the preparation test comprises pre-assembling the parts of the annular collar to each other before performing the factory acceptance test and/or the site acceptance test and/or the calibration test, and disassembling the parts from each other after the factory acceptance test and/or the site acceptance test and/or the calibration test are completed.

The invention will be better understood upon reading the description which will follow, given solely by way of example, and with reference being made to the accompanying drawings in which:
- Figure 1 is a schematic view of an assembly according to a first embodiment of the invention,
- Figure 2 is a schematic radial section of a the hang-off system of the assembly of figure 1,
- Figure 3 is a partially stripped down perspective view of a section of a flexible pipe,
- Figure 4 is a perspective exploded view of the hang-off system of figure 1,
- Figure 5 is a schematic flowchart of a method for assembling according to the invention, and
- Figure 6 is a perspective exploded view of a hang-off system according to a second embodiment of the invention.

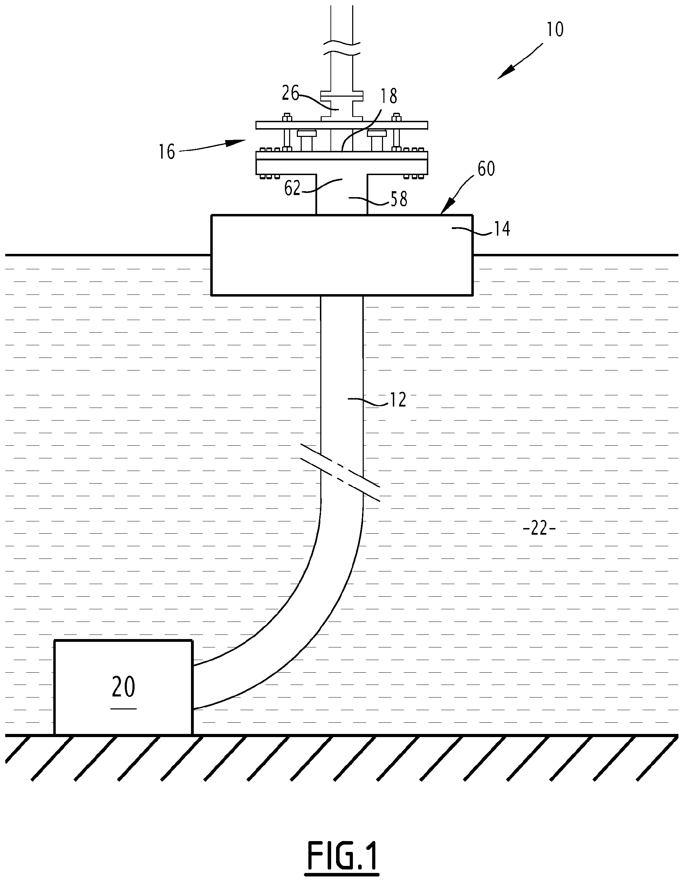

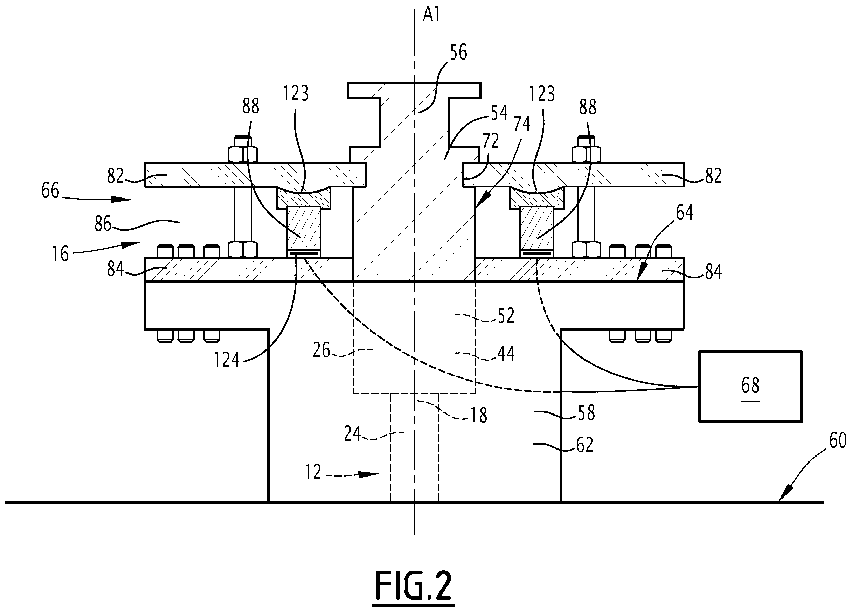

An assembly 10 according to the invention is shown in figures 1 and 2. The assembly 10 comprises a flexible pipe 12, a surface assembly 14 and a hang-off system 16 for maintaining an end 18 of the flexible pipe 12 on the surface assembly 14. In the example of figure 1, the assembly 10 further comprises a bottom assembly 20 submerged in a body of water 22.

The flexible pipe 12 is used to transport production fluids, such as oil and/or gas and/or water from one location to another. The flexible pipe 12, also referred as a riser, is intended to transport fluids from the bottom assembly 20 to the surface assembly 14.

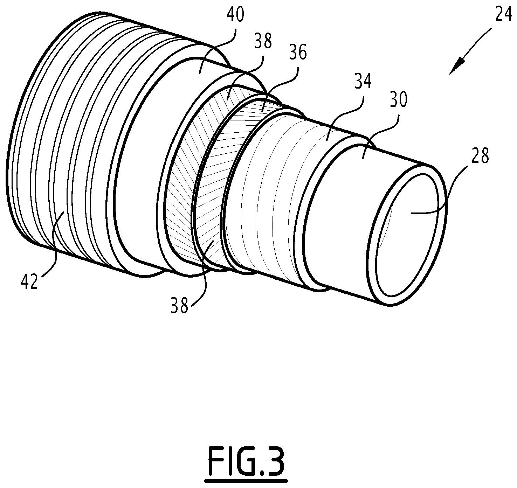

The flexible pipe 12 comprises a flexible pipe body 24 and one or more end fittings 26 along its length. An example of a flexible pipe body 24 is shown in figure 3. The flexible pipe 12 comprises a top end fitting 26 maintained on the surface assembly 14 by the hang-off system 16.

As shown in figure 3, the flexible pipe body 24 is formed by a combination of layered materials delimiting a central passage 28 for circulation of fluids. For example, the flexible pipe body 24 comprises metallic layers, polymeric layers, composite layers, or a combination of different materials.

The flexible pipe body 24 comprises a pressure sheath 30 and an optional innermost carcass layer positioned inside the pressure sheath 30.

The carcass layer is used to prevent collapse of the pressure sheath 30 due to pipe decompression, external pressure, and tensile armor pressure and mechanical crushing loads. The carcass layer is for example a metallic layer, formed from stainless steel. The carcass layer may also be formed from composite, polymer or other material, or a combination of materials. Flexible pipe bodies 24 may be used without a carcass layer and are referred as smooth bore. Alternatively, pipe bodies may be used with a carcass layer and are referred as rough bore.

The pressure sheath 30 acts as a fluid retaining layer and comprises a polymer layer ensuring internal fluid integrity. The pressure sheath 30 may comprise itself several sublayers.

The flexible pipe body 24 may comprise an optional pressure armor layer 34 around the pressure sheath 30. The pressure armor layer 34 is a structural layer that increases the resistance of the flexible pipe 12 to internal and external pressures. The pressure armor layer 34 is for example made of metal, such carbon steel. The pressure armor layer 34 is for example made of a round or profiled wires helically wound along the length of the flexible pipe body 24 at a lay angle typically between about 55° to 90°. The profiled wires are preferably interlocked. The pressure armor layer 34 may also be formed from composite, or other material, or a combination of materials.

The flexible pipe body 24 may comprise an optional first tensile armor layer 36 and an optional second tensile armor layer 38. Each tensile armor layer 36, 38 is used to sustain tensile loads and internal pressure. The tensile armor layers 36, 38 are generally formed by a plurality of metallic wires helically wound along the length of the flexible pipe body 24 at a lay angle typically between about 10° to 55°. The tensile armor layers 36, 38 are often counter-wound in pairs. The tensile armor layers 36, 38 are for example metallic layers. They could also be formed from composite, polymer or a combination of materials.

The flexible pipe body 24 also typically comprises optional layers of abrasion-resistant or anti-wear and insulation and an outer sheath 40 surrounded the inner layers. A carcass 42 may be disposed externally to the outer sheath 40. Said layers comprises a polymer layer used to protect the pipe against penetration of seawater, corrosion, abrasion and mechanical damage.

The end fitting 26 is located at one end 18 of the flexible pipe body 24. The end fitting 26 extends along a first axis A1. The end fitting 26 comprises and end fitting body 44 delimiting an internal bore running along the first axis A1, and a casing assembled to the end fitting body 44, for example through bolts or other securing members.

The casing is sealed to the flexible pipe body 24 and in particular to the outer sheath 40 of the flexible pipe body 24.

The end fitting body 44 extends from a first end 52 delimiting an open-mouth region receiving an end 18 of the flexible pipe body 24, to a second end 54, forming a connector 56.

The connector 56 is a substantially disk-liked flared region. The connector 56 may be connected to a matching connector of a further end fitting body of an adjacent flexible pipe, or to a pipe of the surface assembly 14.

In the example of figure 1, the flexible pipe 12 is disposed across the body of water 22, between the bottom assembly 20 designed for collecting a fluid at the bottom of the body of water 22, and the surface assembly 14 designed for collecting and distributing the fluid. The surface assembly 14 may be a semi-submersible platform, a floating production storage and offloading unit (FPSO), a ship, or any other floating unit such as a ship.

The hang-off system 16 is provided to maintain the flexible pipe 12 onto the surface assembly 14. The hang-off system 16 allows transferring the vertical loads from the flexible pipe 14 to the surface assembly 14. In particular, the hang-off system 16 holds the end fitting 26 in place onto the surface assembly 14 in case of reaction due to an abrupt rupture of the flexible pipe 12.

In the example of figures 1 and 2, the surface assembly 14 comprises a support 58 projecting from a surface 60 of the surface assembly 14. The support 58 is for example a cylindrical tube 62, referred in the prior art as "I-Tube", protruding from the surface 60 of the surface assembly 14 according to the first axis A1 substantially perpendicular to the surface 60. The support 58 delimits a conduit in communication with the body of water 22 and allowing the passage of the flexible pipe 12. The support 58 comprises a top annular surface 64 connected to the hang-off system 16. Preferably, the top annular surface 64 defines a plurality of holes receiving fasteners for assembling the hang-off system 16 to the support 58.

According to the invention, the hang-off system 16 comprises an annular collar 66 extending along the first axis A1, and a data acquisition system 68.

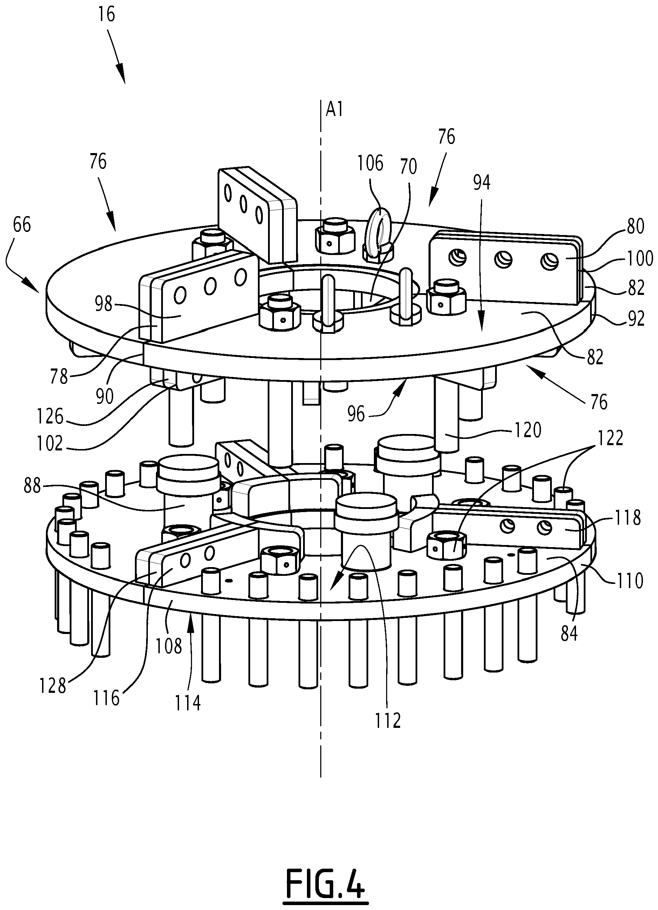

As schematically shown in figures 2 and 4, the annular collar 66 delimits a central passage 70 receiving the flexible pipe 12, and in particular the end fitting 26 of the flexible pipe 12. The annular collar 66 is arranged around the top end fitting 26 of the flexible pipe 12. The annular collar 66 entirely surrounds the end fitting 26. Preferably, the annular collar 66 mechanically cooperates with an annular grove 72 defined in the side wall 74 of the end fitting 26. The annular collar 66 is fixed above the support 58 of the surface assembly 14 in contact with the top annular surface 64 and fixed to the support 58 with a plurality of fixation members.

According to the invention, the annular collar 66 is formed by at least two parts 76 assembled to each other. Each part 76 surrounds a portion, in particular an angular portion, of the side wall 74 of the end fitting 26 around the first axis A1.

In the first embodiment, the annular collar 66 comprises exactly three parts 76 assembled to each other to form the annular collar 66. Each part 76 of the annular collar 66 extends along a circular arc in a plane substantially perpendicular to the first axis A1 between a first end 78 and a second end 80, around the end fitting 26. In the first embodiment, the circular arc has an angle substantially equal to 120°.

According to the invention, each part 76 comprises a top plate 82 and a bottom plate 84 assembled to the top plate 82. The top plate 82 and the bottom plate 84 delimit an intermediate space 86 between them. At least one part 76 comprises at least one load cell 88 arranged in the intermediate space 86 and sandwiched between the top plate 82 and the bottom plate 84.

The top plate 82 is arranged above the bottom plate 84 according to the first axis A1. The top plate 82 extends in a first plane substantially perpendicular to the first axis A1. The top plate 82 extends along a circular arc in the first plane between a first end 90 and a second end 92. In the first embodiment, the circular arc has an angle substantially equal to 120°. The top plate 82 defines a top surface 94 and a bottom surface 96 arranged opposite the top surface 94. The top surface 94 is oriented towards the connector 56. The bottom surface 96 is oriented towards the intermediate space 86. The top surface 94 and the bottom surface 96 are substantially parallel to each other.

Preferably, the top plate 82 comprises at least a first upper assembling portion 98 located at the first end 90 and a second upper assembling portion 100 located at the second end 92. For example, the first upper assembling portion 98 and the second upper assembling portion 100 protrude from the top surface 94 of the top plate 82 opposite the intermediate space 86. Preferably, the first upper assembling portion 98 and the second upper assembling portion 100 extend in respective radial planes relative to the first axis A1. In addition or alternatively, the top plate 82 comprises at least a first lower assembling portion 102 located at the first end 78 and a second lower assembling portion located at the second end 80. For example, the first lower assembling portion 102 and the second lower assembling portion protrude from the bottom surface 96 of the top plate 82 towards the intermediate space 86. Preferably, the first lower assembling portion 102 and the second lower assembling portion extend in respective radial planes relative to the first axis A1. Preferably, the first upper assembling portion 98 and the first lower assembling portion 102 extend in the same radial plane. Preferably, the second upper assembling portion 100 and the second lower assembling portion extend in the same radial plane.

The top plates 82 of the parts 76 of the annular collar 66 are assembled to each other through the first upper and/or lower assembling portions 98, 102 and the second upper and/or lower assembling portions 100. For example, the assembling portions 98, 102, 100 of the parts 76 are bolted to each other.

The top plate 82 may also comprise lifting members 106, such as lifting hooks, protruding from the top surface 94 of the top plate 82 to ease the handling of the hang-off system 16 with a hoisting device (not shown).

The bottom plate 84 is arranged below the top plate 82 according to the first axis A1. The bottom plate 84 extends in a second plane substantially perpendicular to the first axis A1 and substantially parallel to the first plane. The bottom plate 84 extends facing the top plate 82. The bottom plate 84 extends along a circular arc in the second plane between a first end 108 and a second end 110. In the first embodiment, the circular arc has an angle substantially equal to 120°. The bottom plate 84 defines a top surface 112 and a bottom surface 114 arranged opposite the top surface 112. The top surface 112 is oriented towards the intermediate space 86. The bottom surface 114 is oriented towards the support 58. The top surface and the bottom surface are substantially parallel to each other.

Preferably, the bottom plate 84 comprises at least a first upper assembling portion 116 located at the first end 108 and a second upper assembling portion 118 located at the second end 110. For example, the first upper assembling portion 116 and the second upper assembling portion 118 protrude from the top surface 112 of the bottom plate 84 towards the intermediate space 86. Preferably, the first upper assembling portion 116 and the second upper assembling portion 118 extend in respective radial planes relative to the first axis.

The bottom plates 84 of the parts 76 of the annular collar 66 are assembled to each other through the first upper assembling portions 116 and the second upper assembling portions 118. For example, the assembling portions 116, 118 of the parts 76 are bolted to each other.

The bottom plate 84 is preferably bolted to the support 58 and in particular to the top annular surface 64 of the support 58.

Advantageously, each part 76 comprises at least one fastener 120, preferably two fasteners 120, and associated locknuts 122 to assemble the top plate 82 and the bottom plate 84 to each other. Each fastener 120 extends through the intermediate space 86 along an axis substantially parallel to the first axis A1. For example, the fasteners 120 are regularly distributed angularly around the first axis A1. In addition, the fasteners 120 may be arranged along a plurality of radial directions relative to the first axis A1.

The fasteners 120 and the locknuts 122 are critical for the hang-off system 16 since they allow controlling the alignment of the top plate 82 with respect to the bottom plate 84. As it will be described in details later, they allow the creation of an independent measurement module formed by a part 76 of the annular collar 66 avoiding any kind of loose parts and complex assembly during the offshore installation. The fasteners 120 and locknuts 122 allow a proper preparation of each part 76 of the annular collar 66 avoiding inaccurate and unequal tightening effect from one part 76 to another one. This improve the reliability and the accuracy of the measurements performed with the hang-off system 16. Each part 76 is pre-assembled with its top plate 82 and bottom plate 84 onshore after factory acceptance test. The fasteners 120 and the locknuts 122 ensure that the hang-off system 16 is assembled offshore, using the same parts in the same place. This improves the traceability. The fasteners 120 and the locknuts 122 also have a key role regarding the structural integrity. The fasteners 120 and the locknuts 122 allow fulfilling the requirements to resist explosion, i.e, unpredicted and abnormal force applied in the upward direction. The fasteners 120 and the locknuts 122 do not allow lateral or angular movements between the top plate 82 and the bottom plate 84.

Preferably, each part 76 comprises at least one load cell 88 arranged in the intermediate space 86 and sandwiched between the top plate 82 and the bottom plate 84. In the first embodiment, the hang-off system 16 comprises exactly three load cells 88. Each part 76 comprises exactly one load cell 88 arranged in the intermediate space 86. Preferably, the load cells 88 are regularly spaced around the first axis A1. Using three load cells 88 is advantageous since they provide a stable support for the top plates 82. The leveling of the load cells 88 is also easier. However, in a variant, each part 76 comprises several load cells 88, for example a number of load cells 88 comprised between 2 and 5. In any case, the loads cells 88 are leveled to each other.

Each load cell 88 is configured to sense a parameter representative of an axial load applied between the top plate 82 and the bottom plate 84. Each load cell 88 is configured to convert a load applied between the top plate 82 and the bottom plate 84 into a corresponding electrical signal sent to the data acquisition system 68. For example, each load cell 88 comprises at least one load sensor, preferably a plurality of load sensors for redundancy. For example, each load cell 88 is a vibrating wire load cell comprising at least one vibrating wire sensor, preferably a plurality of vibrating wire sensors. In a variant, the load cell 88 is a strain gauge load cell, a pneumatic load cell, a capacitive load cell, a hydraulic load cell or a piezoelectric load cell.

Each load cell 88 rests against the bottom surface 96 of top plate 82 and against the top surface 112 of the bottom plate 84. Each load cell 88 extends according to an axis substantially parallel to the first axis A1. Advantageously, the bottom surface 96 of the top plate 82 and/or the top surface 112 of the bottom plate 84 define a convex surface 123 (figure 2) protruding towards the intermediate space 86 and in contact with the load cell 88. This allow to ensure a good contact between the load cell 88 and the top plate 82/bottom plate 84 and reduce additional measurement uncertainties that a flat-to-flat contact may induce.

Advantageously, at least one part 76 of the annular collar 66 may comprise at least one shim 124, schematically shown in figure 2, arranged between the top surface 112 of the bottom plate 84 and the load cell 88 to compensate machining tolerance which can generate a difference between the heights of the load cells 88 and affect the data reliability. During the onshore assembly of the part 76, if required, the operator easily compensates the height difference of each load cell 88 by using a circular shim of a thickness comprised between 0.1 mm and 0.3 mm for example. In other words, the shims allow leveling the load cells 88 between each other.

Each load cell 88 is connected to the data acquisition system 68 to monitor the time variations of the parameter representative of the load applied between the top plate 82 and the bottom plate 84 of each part 76 of the annular collar 66. The data acquisition system 68 may comprise a memory to record the values of the parameter representative of the load applied between the top plate 82 and the bottom plate 84, and/or a display device (not shown) to display the values of the parameter.

Advantageously, each part 76 of the annular collar 66 comprises at least a first reinforcement element 126 protruding from the top plate 82 towards the intermediate space 86, and a second reinforcement element 128 protruding from the bottom plate 84 towards the intermediate space 86. The first reinforcement element 126 is arranged facing the second reinforcement element 128 along a direction substantially parallel to the first axis A1. When the hang-off system 16 is assembled, the first reinforcement element 126 and the second reinforcement element 128 are separated by a gap comprised between 5 mm and 10 mm.

The reinforcement elements 126, 128 are conservative features to avoid operational problems caused by an unexpected and unpredicted abnormal load. They act as a support and do not allow vertical deflection, improving the structural resistance of the hang-off system 16 in case a load cell 88 structurally fails. The reinforcement elements 126, 128 allow not depending on the load cell 88 integrity to ensure operational continuity and the correct functioning of the hang-off system 16.

Preferably, each part 76 comprises a plurality of first reinforcement elements 126 and a plurality of second reinforcement elements 128 arranged around the first axis A1.

For example, at least a part of the first reinforcement element 126 may be formed by the lower assembling portions 102 of the top plate 82. At least a part of the second reinforcement elements 128 may be formed by the upper assembling portions 116, 118 of the bottom plate 84.

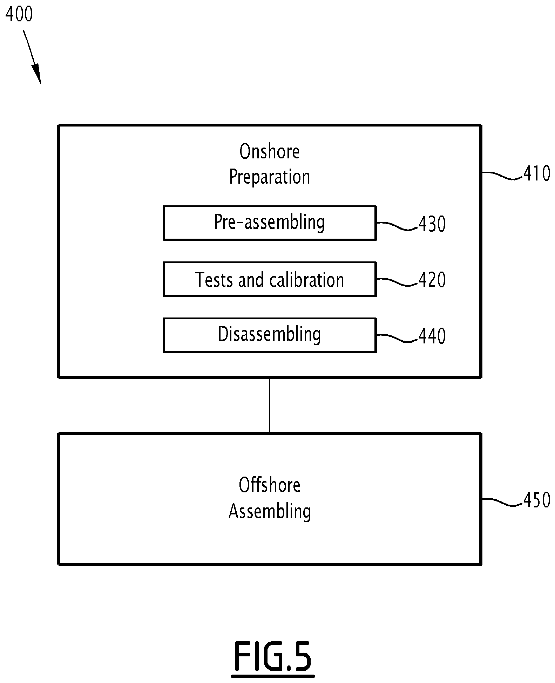

A method 400 for assembling a top-end fitting 26 of a flexible pipe 12 on a surface assembly 14 with a hang-off system 16 as described above is now described in reference to figure 5.

The method 400 comprises a preparation step 410 preferably performed onshore. During this step 400, each part 76 of the annular collar 66 is assembled independently from each other. In particular, for each part 76 of the annular collar 66, the top plate 82 and the bottom plate 74 are assembled to each other without torque using the fasteners 120 and the locknuts 122. The at least one load cell 88 is arranged in the intermediate space 86. In the first embodiment, three independent assembled parts 76 are obtained.

Advantageously, the preparation step 410 comprises a factory acceptance test and/or a site acceptance test and/or a calibration test 420. In particular, preferably, the preparation test 410 comprises pre-assembling 430 the parts 76 of the annular collar 66 to each other before performing the factory acceptance test and/or the site acceptance test and/or the calibration test 420, and disassembling 440 the parts 76 from each other after the factory acceptance test and/or the site acceptance test and/or the calibration test are completed.

The hang-off system 16 may now be assembled to the end fitting 26 offshore during an assembling step 450. During this step 450, the annular collar 66 is formed by assembling the parts 76 to each other around the end fitting 26 and by assembling the parts to the surface assembly 14 via the top surface 64 of the support 58. For example, each part 76 is moved using a hoisting device.

The assembling method 400 is very advantageous since each part 76 of the annular collar 66 is independently pre-assembled, tested and calibrated, preferably onshore. The offshore installation is easier since it only requires assembling the parts 76 between each other. The method 400 ensures traceability a low risk of losing parts.

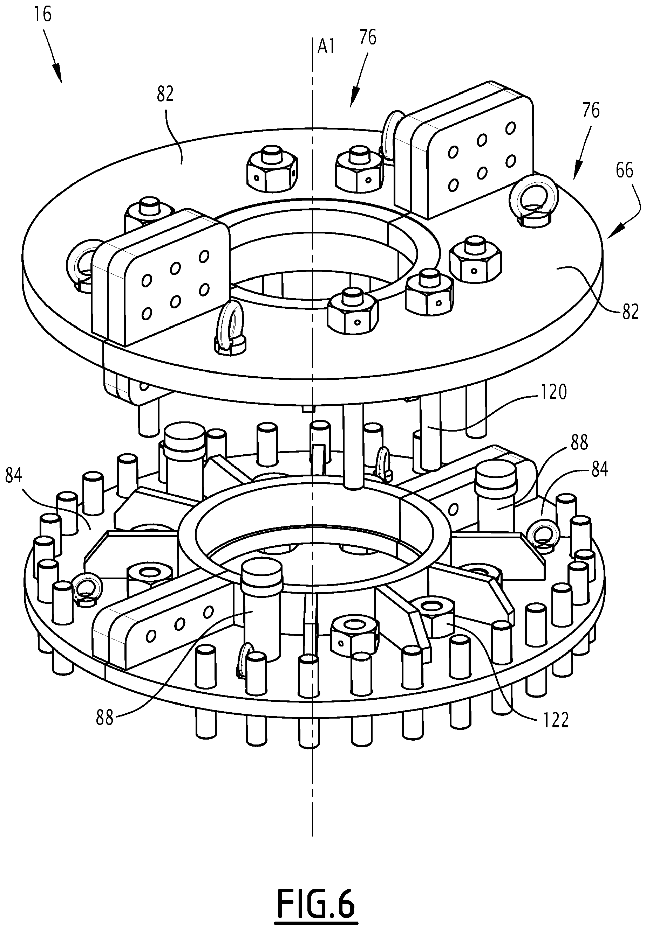

A second embodiment is now described in reference to figure 6. This embodiment is described by differences with respect to the first embodiment.

In this embodiment, the annular collar 66 is formed by exactly two parts 76 assembled to each other. Each part 76 of the annular collar 66 extends along a circular arc in a plane substantially perpendicular to the first axis A1 between a first end 78 and a second end 80, around the end fitting 26. In the second embodiment, the circular arc has an angle substantially equal to 180°. In the second embodiment, the hang-off system 16 comprises exactly three load cells 88, preferably regularly spaced around the first axis A1. A first part 130 among the two parts 76 comprises one load cell 88 and a second part 132 among the two parts 76 comprises two load cells 88.

The assembling method 400 described above is similar for this embodiment.

In a variant of the first embodiment and of the second embodiment, the assembly 10 may comprise an apparatus (not shown) for inspecting and monitoring the internal structures of the flexible pipe, specifically the armor layers 36, 38 of the flexible pipe body 24. The apparatus comprises optical sensors, such as strain gauges based on Fiber Bragg Grating (FBG) technology attached to each wire of the outer armor layer. The strain measurements provided by these sensors make it possible to identify broken wires and detect events associated with wire ruptures. Santiago et al, in "Monitoring Flexible Risers with Optical Sensors - Operational Experience and Future Perspectives", Offshore Technology Conference, 2017, WO 2014/161056 A1 and EP 2 489 824 A2 disclose an example of such kind of apparatus called MODA (for "Monitoring based on Optical fiber attached Directly on Armor wires") and developed by the company Petrobras.

Advantageously, in this variant of the first and second embodiments of the invention, the load cells 88 of the hang-off system 16 according to the invention are fiber optic load cells. The data acquisition system 68 is then connected to both the loads cells 88 of the hand-off system 16 and the optical sensors of the apparatus for inspecting and monitoring the internal structures of the flexible pipe 12. This is particularly advantageous since only one single data acquisition system 68 is used to record both kind of measurements.

In that respect, the measurements obtained with the hang-off system 16 according to the invention may be used to calibrate the measurements obtained with the apparatus for inspecting and monitoring the internal structures of the flexible pipe 12. Moreover, both kind of measurements may be used in modeling software to assess the integrity of the end fitting 26 and of the flexible pipe 12.

## Claims

1. A hang-off system (16) for measuring a top tension in a flexible pipe (12), said flexible pipe (12) comprising a flexible pipe body (24) and a top end-fitting (26) arranged at an end of the flexible pipe body (24), the hang-off system (16) being intended to maintain the top end-fitting (26) on a surface assembly (14), the hang-off system (16) comprising :
- an annular collar (66) extending along a first axis (A1), the annular collar (66) being intended to be arranged around the top end-fitting (26), the annular collar (66) being formed by at least two parts (76) assembled to each other, each part (76) comprising a top plate (82) and a bottom plate (84) assembled to each other, said top plate (82) and bottom plate (84) delimiting an intermediate space (86) between them, at least one part (76) comprising at least one load cell (88) arranged in the intermediate space (86) and sandwiched between the top plate (82) and the bottom plate (84), the bottom plate (84) being intended to be assembled on the surface assembly (14),
- a data acquisition system (68) connected to the load cell (86).

2. The system (16) of claim 1, wherein each part (76) comprises at least one load cell (88), the load cells (88) of the hang-off system (16) being regularly spaced around the first axis (A1).

3. The system (16) according to claim 1 or 2, wherein the top plate (82) mainly extends in a first plane and the bottom plate (84) mainly extends in a second plane substantially parallel to the first plane and perpendicular to the first axis (A1).

4. The system (16) according to any one of claims 1 to 3, wherein the annular collar (66) is formed by exactly two parts (76) or exactly three parts (76) assembled to each other.

5. The system (16) according to claim 4, wherein the annular collar (66) is formed by exactly three parts (76) assembled to each other, each part (76) comprising a single load cell (88) sandwiched between the top plate (82) and the bottom plate (84) of said part (76).

6. The system (16) according to any one of claims 1 to 5, wherein each part (76) comprises a plurality of fasteners (120) and locknuts (122) for assembling the top plate (82) to the bottom plate (84), each fastener (120) extending along an axis substantially parallel to the first axis (A1).

7. The system (16) according to any one of claims 1 to 6, wherein the top plate (82) and/or the bottom plate (84) define a convex surface (123) protruding towards the intermediate space (86), said convex surface (123) being in contact with the load cell (88).

8. The system (16) according to any one of claims 1 to 7, wherein each bottom plate (84) and each top plate (82) of each part (76) of the annular collar (66) extends respectively along a circular arc in a plane substantially perpendicular to the first axis (A1) between a first end (90, 108) and a second end (92, 110), each first end (90, 108) and second end (92, 110) comprising at least an assembling portion (98, 100, 102, 116, 118), the at least two parts (76) of the annular collar (66) being assembled to each other by said assembling portions (98, 100, 102, 116, 118).

9. The system (16) according to any one of claims 1 to 8, wherein at least one part (76) of the annular collar (66) comprises at least one shim (124) arranged between the bottom plate (84) and the load cell (88).

10. The system (16) according to any one of claims 1 to 9, wherein each part (76) of the annular collar (66) comprises at least a first reinforcement element (126) protruding from the top plate (82) towards the intermediate space (86), and a second reinforcement element (128) protruding from the bottom plate (84) towards the intermediate space (86), the first reinforcement element (126) being arranged facing the second reinforcement element (128) along a direction substantially parallel to the first axis (A1), the first reinforcement element (126) and the second reinforcement element (128) being separated by a gap comprised between 5 mm and 10 mm.

11. An assembly (10) comprising:
- a flexible pipe (12) comprising a top end-fitting (26),
- a surface assembly (14),
- a hang-off system (16) according to any one of claims 1 to 10, the hang-off system (16) maintaining the top end-fitting (26) on the surface assembly (14).

12. A method (400) for assembling a top end-fitting (26) of a flexible pipe (12) on a surface assembly (14) with a hang-off system (16) according to any one of claims 1 to 10, said method (400) comprising the following steps:
- a preparation step (410) comprising, for each part (76) of the annular collar (66), assembling the top plate (82) to the bottom plate (84) and arranging at least one load cell (88) in the intermediate space (86) of one of the parts (76),
- an assembling step (450) comprising forming the annular collar (66) by assembling the parts (76) to each other around the end fitting (26) and by assembling the parts (76) to the surface assembly (14).

13. The method (400) according to claim 12, wherein the preparation step (410) is performed onshore and the assembling step (450) is performed offshore.

14. The method (400) according to claim 12 or 13, wherein the preparation step (410) comprises a factory acceptance test and/or a site acceptance test and/or a calibration test (420).

15. The method (400) according to claim 14, wherein the preparation test (410) comprises pre-assembling (430) the parts (76) of the annular collar (66) to each other before performing the factory acceptance test and/or the site acceptance test and/or the calibration test (420), and disassembling (440) the parts (76) from each other after the factory acceptance test and/or the site acceptance test and/or the calibration test are completed.

## Patentansprüche

1. Hängesystem (16) zum Messen einer oberen Spannung in einem flexiblen Rohr (12), wobei das flexible Rohr (12) einen flexiblen Rohrkörper (24) und ein an einem Ende des flexiblen Rohrkörpers (24) angeordnetes oberes Endstück (26) umfasst, wobei das Hängesystem (16) dazu bestimmt ist, das obere Endstück (26) an einer Oberflächenanordnung (14) zu halten, wobei das Hängesystem (16) umfasst:
- eine ringförmige Manschette (66), die sich entlang einer ersten Achse (A1) erstreckt, wobei die ringförmige Manschette (66) dazu bestimmt ist, um das obere Endstück (26) herum angeordnet zu werden, wobei die ringförmige Manschette (66) aus mindestens zwei miteinander verbundenen Teilen (76) gebildet ist, wobei jedes Teil (76) eine obere Platte (82) und eine untere Platte (84) umfasst, die miteinander verbunden sind, wobei die obere Platte (82) und die untere Platte (84) einen Zwischenraum (86) zwischen sich begrenzen, wobei mindestens ein Teil (76) mindestens eine Wägezelle (88) aufweist, die in dem Zwischenraum (86) angeordnet und zwischen der oberen Platte (82) und der unteren Platte (84) eingefügt ist, wobei die untere Platte (84) dazu bestimmt ist, auf der Oberflächenanordnung (14) montiert zu werden,
- ein Datenerfassungssystem (68), das mit der Wägezelle (86) verbunden ist.

2. System (16) nach Anspruch 1, wobei jedes Teil (76) mindestens eine Wägezelle (88) umfasst, wobei die Wägezellen (88) des Hängesystems (16) in regelmäßigen Abständen um die erste Achse (A1) herum angebracht sind.

3. System (16) nach Anspruch 1 oder 2, wobei sich die obere Platte (82) hauptsächlich in einer ersten Ebene und die untere Platte (84) hauptsächlich in einer zweiten Ebene erstreckt, die im Wesentlichen parallel zu der ersten Ebene und senkrecht zu der ersten Achse (A1) verläuft.

4. System (16) nach einem der Ansprüche 1 bis 3, wobei die ringförmige Manschette (66) aus genau zwei oder genau drei miteinander verbundenen Teilen (76) gebildet ist.

5. System (16) nach Anspruch 4, wobei die ringförmige Manschette (66) aus genau drei aneinander montierten Teilen (76) gebildet wird, wobei jedes Teil (76) eine einzelne Wägezelle (88) umfasst, die zwischen der oberen Platte (82) und der unteren Platte (84) des Teils (76) eingebettet ist.

6. System (16) nach einem der Ansprüche 1 bis 5, wobei jedes Teil (76) eine Vielzahl von Befestigungselementen (120) und Sicherungsmuttern (122) zum Zusammenbau der oberen Platte (82) mit der unteren Platte (84) umfasst, wobei sich jedes Befestigungselement (120) entlang einer Achse erstreckt, die im Wesentlichen parallel zu der ersten Achse (A1) verläuft.

7. System (16) nach einem der Ansprüche 1 bis 6, wobei die obere Platte (82) und/oder die untere Platte (84) eine konvexe Oberfläche (123) definieren, die in Richtung des Zwischenraums (86) vorsteht, wobei die konvexe Oberfläche (123) in Kontakt mit der Wägezelle (88) steht.

8. System (16) nach einem der Ansprüche 1 bis 7, wobei sich jede untere Platte (84) und jede obere Platte (82) jedes Teils (76) der ringförmigen Manschette (66) jeweils entlang eines Kreisbogens in einer Ebene im Wesentlichen senkrecht zur ersten Achse (A1) zwischen einem ersten Ende (90, 108) und einem zweiten Ende (92, 110) erstreckt, wobei jedes erste Ende (90, 108) und jedes zweite Ende (92, 110) mindestens einen Montageabschnitt (98, 100, 102, 116, 118) aufweist, wobei die mindestens zwei Teile (76) der ringförmigen Manschette (66) durch die Montageabschnitte (98, 100, 102, 116, 118) miteinander verbunden sind.

9. System (16) nach einem der Ansprüche 1 bis 8, wobei mindestens ein Teil (76) der ringförmigen Manschette (66) mindestens eine Unterlegscheibe (124) umfasst, die zwischen der unteren Platte (84) und der Wägezelle (88) angeordnet ist.

10. System (16) nach einem der Ansprüche 1 bis 9, wobei jeder Teil (76) der ringförmigen Manschette (66) mindestens ein erstes Verstärkungselement (126), das von der oberen Platte (82) in Richtung des Zwischenraums (86) vorsteht, und ein zweites Verstärkungselement (128) umfasst, das von der unteren Platte (84) in Richtung des Zwischenraums (86) vorsteht, wobei das erste Verstärkungselement (126) gegenüber dem zweiten Verstärkungselement (128) entlang einer Richtung im Wesentlichen parallel zu der ersten Achse (A1) angeordnet ist, wobei das erste Verstärkungselement (126) und das zweite Verstärkungselement (128) durch einen Spalt zwischen 5 mm und 10 mm getrennt sind.

11. Anordnung (10), umfassend:
- ein flexibles Rohr (12) mit einem oberen Endstück (26),
- eine Oberflächenanordnung (14),
- ein Hängesystem (16) nach einem der Ansprüche 1 bis 10, wobei das Hängesystem (16) das obere Endstück (26) an der Oberflächenanordnung (14) hält.

12. Verfahren (400) zum Montieren eines oberen Endstücks (26) eines flexiblen Rohrs (12) auf einer Oberflächenanordnung (14) mit einem Hängesystem (16) nach einem der Ansprüche 1 bis 10, wobei das Verfahren (400) die folgenden Schritte umfasst:
- einen Vorbereitungsschritt (410), der für jedes Teil (76) der ringförmigen Manschette (66) die Montage der oberen Platte (82) an der unteren Platte (84) und die Anordnung mindestens einer Wägezelle (88) in dem Zwischenraum (86) eines der Teile (76) umfasst,
- einen Zusammenbauschritt (450), der das Bilden der ringförmigen Manschette (66) durch Zusammenbauen der Teile (76) aneinander um das Endstück (26) herum und durch Zusammenbauen der Teile (76) an der Oberflächenanordnung (14) umfasst.

13. Verfahren (400) nach Anspruch 12, wobei der Vorbereitungsschritt (410) onshore und der Zusammenbauschritt (450) offshore durchgeführt wird.

14. Verfahren (400) nach Anspruch 12 oder 13, wobei der Vorbereitungsschritt (410) eine Werksabnahmeprüfung und/oder eine Standortabnahmeprüfung und/oder eine Kalibrierungsprüfung (420) umfasst.

15. Verfahren (400) nach Anspruch 14, wobei die Vorbereitungsprüfung (410) das Vormontieren (430) der Teile (76) der ringförmigen Manschette (66) zueinander vor der Durchführung der Werksabnahmeprüfung und/oder der Standortabnahmeprüfung und/oder der Kalibrierungsprüfung (420) und das Demontieren (440) der Teile (76) voneinander nach Abschluss der Werksabnahmeprüfung und/oder der Standortabnahmeprüfung und/oder der Kalibrierungsprüfung umfasst.

## Revendications

1. Système d'accrochage (16) pour mesurer une tension supérieure dans une conduite flexible (12), ladite conduite flexible (12) comprenant un corps de conduite flexible (24) et un embout supérieur (26) disposé à une extrémité du corps de conduite flexible (24), le système d'accrochage (16) étant destiné à maintenir le raccord d'extrémité supérieure (26) sur un ensemble de surface (14), le système d'accrochage (16) comprenant :
- un collet annulaire (66) s'étendant le long d'un premier axe (A1), le collet annulaire (66) étant destiné à être disposé autour de l'embout supérieur (26), le collet annulaire (66) étant formé d'au moins deux parties (76) assemblées l'une à l'autre, chaque partie (76) comprenant une plaque supérieure (82) et une plaque inférieure (84) assemblées l'une à l'autre, lesdites plaque supérieure (82) et plaque inférieure (84) délimitant entre elles un espace intermédiaire (86), au moins une partie (76) comprenant au moins une cellule de charge (88) disposée dans l'espace intermédiaire (86) et prise en sandwich entre la plaque supérieure (82) et la plaque inférieure (84), la plaque inférieure (84) étant destinée à être assemblée sur l'ensemble de surface (14),
- un système d'acquisition de données (68) connecté à la cellule de charge (86).

2. Système (16) selon la revendication 1, dans lequel chaque partie (76) comprend au moins une cellule de charge (88), les cellules de charge (88) du système d'accrochage (16) étant régulièrement espacées autour du premier axe (A1).

3. Système (16) selon la revendication 1 ou 2, dans lequel la plaque supérieure (82) s'étend principalement dans un premier plan et la plaque inférieure (84) s'étend principalement dans un second plan sensiblement parallèle au premier plan et perpendiculaire au premier axe (A1).

4. Système (16) selon l'une quelconque des revendications 1 à 3, dans lequel le collet annulaire (66) est formé d'exactement deux parties (76) ou d'exactement trois parties (76) assemblées les unes aux autres.

5. Système (16) selon la revendication 4, dans lequel le collet annulaire (66) est formé d'exactement trois parties (76) assemblées les unes aux autres, chaque partie (76) comprenant une seule cellule de charge (88) prise en sandwich entre la plaque supérieure (82) et la plaque inférieure (84) de ladite partie (76).

6. Système (16) selon l'une quelconque des revendications 1 à 5, dans lequel chaque partie (76) comprend une pluralité de fixations (120) et d'écrous de blocage (122) pour assembler la plaque supérieure (82) à la plaque inférieure (84), chaque fixation (120) s'étendant le long d'un axe sensiblement parallèle au premier axe (A1).

7. Système (16) selon l'une quelconque des revendications 1 à 6, dans lequel la plaque supérieure (82) et/ou la plaque inférieure (84) définissent une surface convexe (123) faisant saillie vers l'espace intermédiaire (86), ladite surface convexe (123) étant en contact avec la cellule de charge (88).

8. Système (16) selon l'une quelconque des revendications 1 à 7, dans lequel chaque plaque inférieure (84) et chaque plaque supérieure (82) de chaque partie (76) du collet annulaire (66) s'étend respectivement le long d'un arc de cercle dans un plan sensiblement perpendiculaire au premier axe (A1) entre une première extrémité (90, 108) et une seconde extrémité (92, 110), chaque première extrémité (90, 108) et seconde extrémité (92, 110) comprenant au moins une partie d'assemblage (98, 100, 102, 116, 118), les au moins deux parties (76) du collet annulaire (66) étant assemblées l'une à l'autre par lesdites parties d'assemblage (98, 100, 102, 116, 118).

9. Système (16) selon l'une quelconque des revendications 1 à 8, dans lequel au moins une partie (76) du collet annulaire (66) comprend au moins une cale (124) disposée entre la plaque inférieure (84) et la cellule de charge (88).

10. Système (16) selon l'une quelconque des revendications 1 à 9, dans lequel chaque partie (76) du collet annulaire (66) comprend au moins un premier élément de renforcement (126) faisant saillie de la plaque supérieure (82) vers l'espace intermédiaire (86), et un deuxième élément de renforcement (128) faisant saillie de la plaque inférieure (84) vers l'espace intermédiaire (86), le premier élément de renforcement (126) étant disposé face au second élément de renforcement (128) selon une direction sensiblement parallèle au premier axe (A1), le premier élément de renforcement (126) et le second élément de renforcement (128) étant séparés par un espace compris entre 5 mm et 10 mm.

11. Ensemble (10) comprenant :
- un tuyau flexible (12) comprenant un embout supérieur (26),
- un ensemble de surface (14),
- un système d'accrochage (16) selon l'une quelconque des revendications 1 à 10, le système d'accrochage (16) maintenant l'embout supérieur (26) sur l'ensemble de surface (14).

12. Procédé (400) d'assemblage d'un embout supérieur (26) d'une conduite flexible (12) sur un ensemble de surface (14) avec un système d'accrochage (16) selon l'une quelconque des revendications 1 à 10, ledit procédé (400) comprenant les étapes suivantes :
- une étape de préparation (410) comprenant, pour chaque partie (76) du collet annulaire (66), l'assemblage de la plaque supérieure (82) à la plaque inférieure (84) et la disposition d'au moins une cellule de charge (88) dans l'espace intermédiaire (86) de l'une des parties (76),
- une étape d'assemblage (450) consistant à former le collet annulaire (66) en assemblant les pièces (76) les unes aux autres autour de l'embout (26) et en assemblant les pièces (76) à l'ensemble de surface (14).

13. Procédé (400) selon la revendication 12, dans lequel l'étape de préparation (410) est réalisée à terre et l'étape d'assemblage (450) est réalisée en mer.

14. Procédé (400) selon la revendication 12 ou 13, dans lequel l'étape de préparation (410) comprend un test d'acceptation en usine et/ou un test d'acceptation sur site et/ou un test d'étalonnage (420).

15. Procédé (400) selon la revendication 14, dans lequel le test de préparation (410) consiste à pré-assembler (430) les parties (76) du collet annulaire (66) les unes aux autres avant d'effectuer le test d'acceptation en usine et/ou le test d'acceptation sur site et/ou le test d'étalonnage (420), et à désassembler (440) les parties (76) les unes des autres après que le test d'acceptation en usine et/ou le test d'acceptation sur site et/ou le test d'étalonnage sont terminés.
